# EUROPEAN PATENT SPECIFICATION

(11) **EP 1 861 619 B1**
(45) Date of publication and mention of the grant of the patent: **04.08.2010**
(21) Application number: 06755831.2
(22) Date of filing: 14.03.2006
(51) Int. Cl.: F03D 1/06

(54) **TENSION WHEEL IN A ROTOR SYSTEM FOR WIND AND WATER TURBINES**
ZUGRAD IN EINEM ROTORSYSTEM FÜR WIND- UND WASSERTURBINEN
ROUE DE TENSION DANS UN SYSTEME DE ROTOR POUR TURBINES HYDRAULIQUES ET EOLIENNES

(30) Priority: 15.03.2005 US 662160 P
(43) Date of publication of application: 05.12.2007
(73) Proprietor: Clipper Windpower, Inc., Carpinteria CA 93013 (US)
(72) Inventor: DEHLSEN, James, G., P., Montecito, CA 93108 (US); BROWN, Matthew, San Diego, CA 92107 (US)
(74) Representative: Schmidt, Frank-Michael
(86) International application number: PCT/IB2006/000605
(87) International publication number: WO 2006/097836

(56) References cited:
- EP-A- 0 016 602
- WO-A-03/076803
- FR-A- 578 058
- US-A- 693 481
- US-A- 1 465 404
- US-A- 4 319 865
- US-A- 4 330 714

## Description

### BACKGROUND OF THE INVENTION

### 1. Field of the Invention

The invention relates to a rotor system for a fluid-flow turbine comprising a hub mounted on a shaft, and a plurality of rotor blades.

### 2. Prior Art

In a typical horizontal-axis wind turbine, a nacelle is mounted on a tall vertical tower. The nacelle houses power-transmitting mechanisms, electrical equipment and supports a rotor system at one end. Rotor systems for horizontal-axis wind turbines ordinarily include one or more blades attached to a rotor hub on a shaft. Wind flow turns the rotor, which turns the shaft in the nacelle. The shaft turns gears that transmit torque to electric generators. The nacelle typically pivots about the vertical tower to take advantage of wind flowing from any direction. The pivoting about this vertical-axis in response to changes in wind direction is known as yaw or yaw response and the vertical-axis is referred to as the yaw-axis. As wind moves past the blades with enough speed the rotor system rotates and the wind turbine converts the wind energy into electrical energy through the generators. Electrical outputs of the generators are connected to a power grid.

Conventional rotor systems tend to move in response to changes in wind direction during operation by hunting for a proper yaw position relative to a new wind direction, rather than tracking such changes in a stable manner. Wind direction changes or wind gusts pivot the rotor system of typical wind turbines away from a proper yaw position and the system then hunts for a proper position relative to the mean wind direction when the transient wind dissipates. Unstable hunting motions result in undesirable vibration and stress on the rotor system. Blade and rotor hub fatigue and ultimate failure of the blade and rotor hub where the blade and rotor hub meet is directly related to the number of hunting motions and the speed at which they occur. Rapid changes in yaw dramatically increase the forces acting against the rotational inertia of the entire rotor system, magnifying the bending moments at the blade root where it meets and is attached to the rotor hub. Vibration and stress cause fatigue in the rotor hub and blade root thereby decreasing the useful life of the equipment and reducing dependability.

A hemispherical shape, that is, having a shape approximating that of half of a sphere bounded by a great circle, is the ideal geometry for a highly loaded component such as the hub of a wind or water turbine. For this reason, hemispherical hubs are in common use. However the hemispherical shape is compromised by the penetration of equally spaced holes to accommodate each of several blade roots. Since these holes remove some of the structural strength of the hub, the remaining material of the hub becomes more highly stressed. The hub size, weight, and cost are determined by the ratio of the blade holes to the hemispherical diameter. The blade bending moments deflect the hemispherical shape, concentrating stress in the material remaining between the blade holes.

US 4,319,865 discloses a wind turbine with an inner and an outer rim, the outer rim being coupled at its periphery to a generator. The rim structure consists of a number of segments, each including a blade, a primary vane and an auxiliary vane, wherein the blades are immovably arranged between the inner and outer rim.

WO 03/076803 A1 discloses a wind turbine with a high number of main blades. The common hub is replaced with a relatively wide and closed rotation track at which the main blades are turnable attached, extending outward and being connected to an outer rim. Auxiliary blades are attached to the rotation track, extending inward and being connected to an inner circular ring. Furthermore, the turbine comprises a number of auxiliary blades extending outward from the outer rum and being connected to an outer most rim, i.e. the wind turbine comprises three blade sections between the center and the outer most rim.

As wind turbine rotor size increases in the multi-megawatt size range, blade length imposes structural requirements on the blade root end which adds weight which in turn imposes even greater structural requirements, which in the end limits blade up-scaling possibilities. However, the wind turbine designs known from the prior art are not suitable for rotor blade up-scaling and therefore it is desirable to limit blade length to materials and designs which provide sound structural margins but increase rotor diameter, to provide a greater rotor swept area resulting in greater wind energy capture.

It is also desirable to provide a rotor hub geometry that has a sound structure while increasing the rotor swept area.

### SUMMARY OF THE INVENTION

In accordance with the principles of this invention a rotor system for a fluid-flow turbine comprises a hub mounted on a shaft, a plurality of rotor blades, and a tension wheel, the tension wheel comprising a rim structure mounted to the hub with a plurality of spokes, wherein the rim structure comprises an outer rim and an inner rim interconnected with each other.

The rotor blades extend outward from the rim structure of the tension wheel and are pitchable attached to the rim structure and extended through the outer and inner rims into the area circumscribed by the rim structure such that pitch control for the rotor blades can be retained at the hub.

In a preferred embodiment the rotor blades are mounted to the hub and comprise an inner section between the hub and the rim structure and an outer section outside the rim structure. Preferably, not only the outer section comprises blades, but also the inner section comprises airfoils, such as blades or sails, to harness the wind energy in the area circumscribed by the rim structure. In a preferred embodiment also the spokes comprises airfoils, such as blades or sails, to harness the wind energy further.

The invention has the advantage of limiting blade length to materials and designs which provide sound structural margins but increase the rotor swept area (rotor diameter) by replacing a conventional hub design with a tension wheel hub arrangement with blades attached to the rim of the tension wheel.

While the increase in swept area is accomplished with blades of a length, which meets suitable structural requirements, it does so at the cost of not harnessing the wind energy in the area of the rotor circumscribed by the tension wheel hub. The lost energy can, however be captured by applying airfoils, such as blades or sails, to the spokes of the tension wheel or by blades comprising an outer blade section attached to the rim of the tension wheel and an inner blade section between the rim and the hub.

### BRIEF DESCRIPTION OF THE DRAWINGS

FIGURE 1 is a front view of a rotor system and fork-top tower;
FIGURE 2 is a side view of a the rotor system shown in FIGURE 1 having twin drive trains;
FIGURE 3 is a side view of a the rotor system shown in FIGURE 1 having a single drive train;
FIGURE 4 is a cross sectional view of the wheel hub and blade mounted on the wheel rim;
FIGURE 5 is a partial sectional view of the wheel hub with sails or blades mounted on the wheel spokes;
FIGURE 6 is an illustration of the approximate net energy capture accomplished by extending the area swept by the rotor by using a tension wheel hub;
FIGURE 7 is a perspective schematic view of a rotor system in which applicant's invention is embodied showing in more detail the tension wheel;
FIGURE 8 shows in more detail the blade mount to the tension wheel and the hub;
FIGURE 9 shows the inner blade mount to the hub;
FIGURE 10 shows the outer blade mount to the rim structure of the tension wheel; and
FIGURE 11 shows in more detail the mount of the tension wheel to the hub and of the hub to the tower.

### DETAILED DESCRIPTION OF THE INVENTION

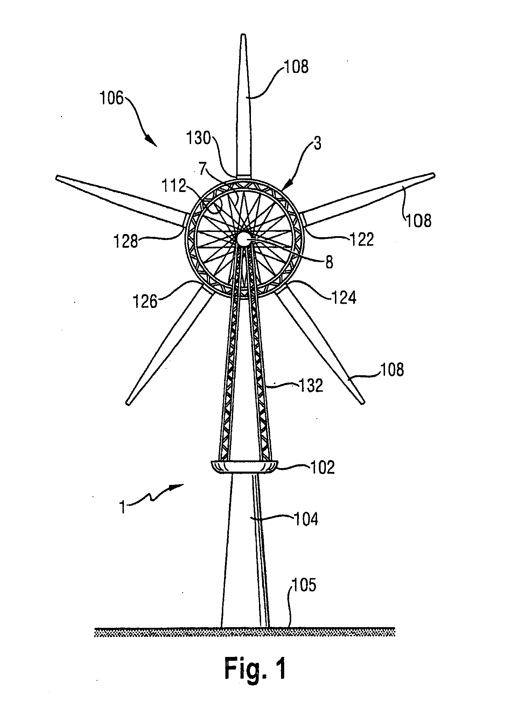

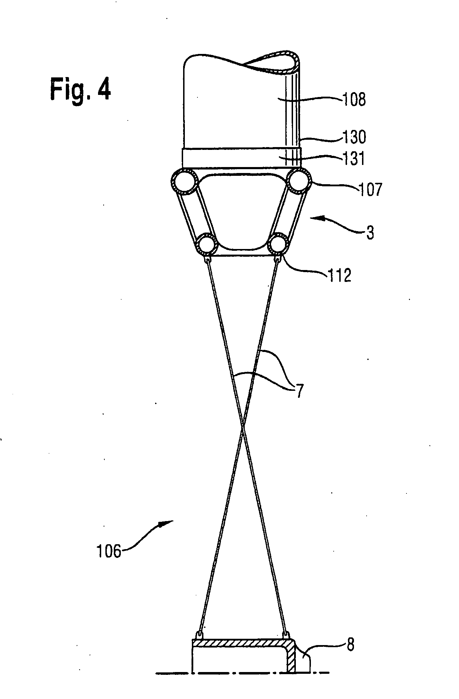

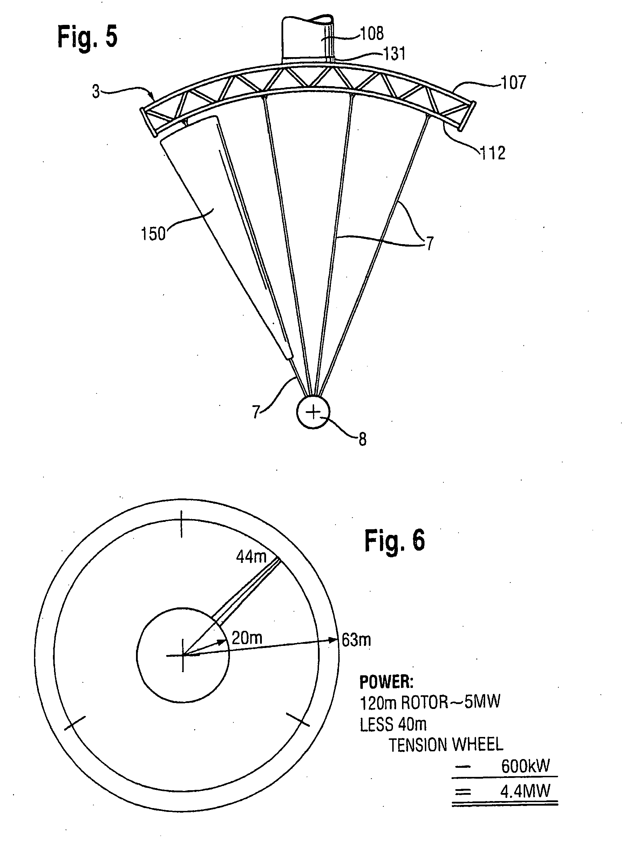

Refer to FIGURE 1, which is a front view of a rotor system and fork-top tower 1. The wind power-generating device includes an electric generator housed in a turbine nacelle 2, which is mounted by a fork-top section, 132, to a yaw base 102 atop a tall tower structure 104 anchored to the ground 105. The turbine yaw base 102 is free to rotate in the horizontal plane such that it tends to remain in the path of prevailing wind current. The turbine has a tension wheel hub assembly 106 comprising a tension wheel mounted on a hub 8. The tension wheel consist of a rim structure 3 supported by spokes 7 attached to the hub 8. The rim structure 3 (shown in more detail in Figures 4 and 5) comprises an inner rim 112 (to which the spokes 7 are attached) and an outer rim 107. The main blades 108 are attached to the outer rim 107. The blades 108 rotate in response to wind current. Each blade root 122, 124, 126, 128, 130 is mounted to the tension wheel outer rim 107. Each of the blades 108 may have a blade extension section that is variable in length to provide a variable diameter rotor and may be geared to change pitch.

The nacelle 2 houses power-transmitting mechanisms, electrical equipment and a shaft that supports the rotor. The rotor system shown in **FIGURE 1** has five blades 108 attached to the outer rim 107 of the tension wheel hub assembly 106, which turns a shaft in the nacelle 2. The shaft turns gears that transmit torque to electric generators. The nacelle 2 pivots about a vertical axis to take advantage of wind flowing from any direction. The pivoting about this vertical-axis in response to changes in wind direction is known as yaw or yaw response and the vertical-axis is referred to as the yaw-axis. As wind moves past the blades 108 with enough speed the rotor system rotates and the wind turbine converts the wind energy into electrical energy through the generators. Electrical outputs of the generators are connected to a power grid.

The rotor diameter may be controlled to fully extend the rotor at low flow velocity and to retract the rotor as flow velocity increases such that the loads delivered by or exerted upon the rotor do not exceed set limits. The turbine is held by the tower structure in the path of the wind current such that the turbine is held in place horizontally in alignment with the wind current. The electric generator is driven by the turbine to produce electricity and is connected to power carrying cables inter-connecting to other units and/or to a power grid.

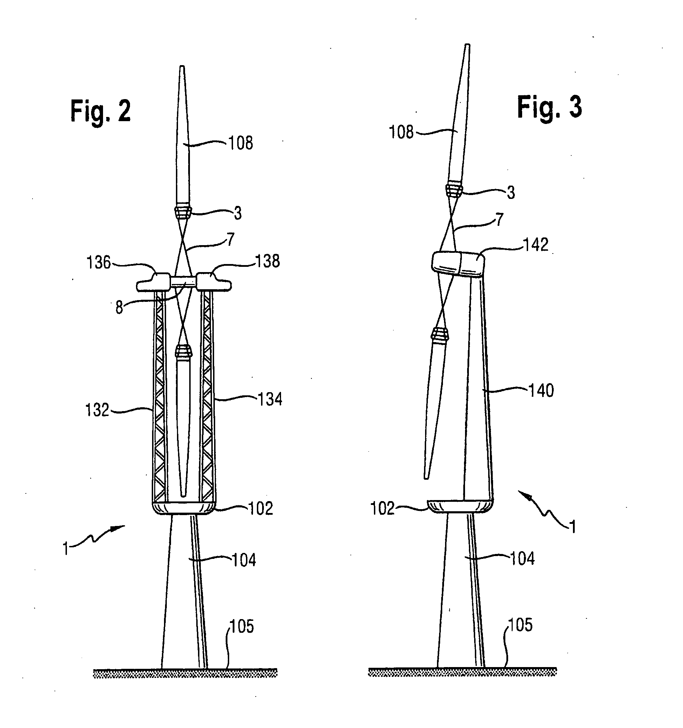

Refer to **FIGURE 2**, which is a side view of the rotor system shown in **FIGURE 1**. The yaw base 102 supports a fork top tower having two sections 132, 134 on top of which two nacelles 136, 138 are attached.

Refer to **FIGURE 3**, which is a side view of an alternative rotor system supporting only one nacelle 142. The yaw base 102 supports a single tower section 140 on top of which nacelle 142 is attached.

Refer to **FIGURE 4**, which is a cross sectional view of the tension wheel hub assembly 106 illustrating how the blade root 130 is mounted on the wheel outer rim 107 using a blade bearing 131.

Refer to **FIGURE 5**, which is a partial sectional view of the wheel hub with sails or blades mounted on the wheel spokes 7. A blade or sail 150 is shown attached to the spoke 7 between the inner rim 112 and the hub 8, which is attached to the main shaft of the nacelle 2. The result in this hybrid arrangement is that otherwise lost wind energy in the area circumscribed by the tension wheel rim 3 is captured by the blade or sail 150.

It will be understood by those skilled in the art that the main blades 108 may be extended partially or fully into the area circumscribed by the tension wheel rim 3 to capture lost wind energy in the area circumscribed by the tension wheel rim. If main blades 108 are extended fully into the area circumscribed by the tension wheel rim they may be attached to an appropriately sized hub 8 in a conventional manner. If necessary, the main blades 108 may be tapered in this area in order to accommodate the spokes 7. The blades or sails may also be employed on the spokes 7 to fill in the remaining areas left vacant by the extended main blades.

In the hybrid designs described, the stress on the hub 8 will be much less than in a conventional rotor, enabling the use of much longer blades 108. This is because the tension wheel structure design in accordance with the present invention relieves stress on the hub 8. It will also be understood that in the situation wherein the blades 108 are extended into the area circumscribed by the tension wheel rim, pitch control for the main blades 108 and the spoke-mounted blades/sails can be retained at the hub 8 as is conventional.

Refer to **FIGURE 6**, which illustrates the approximate net energy capture accomplished by extending the area swept by the rotor by using a tension wheel hub.

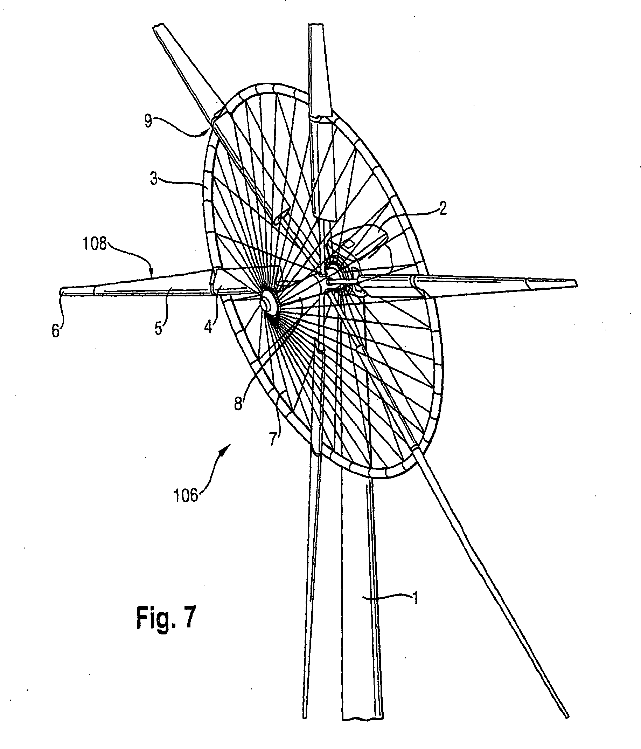

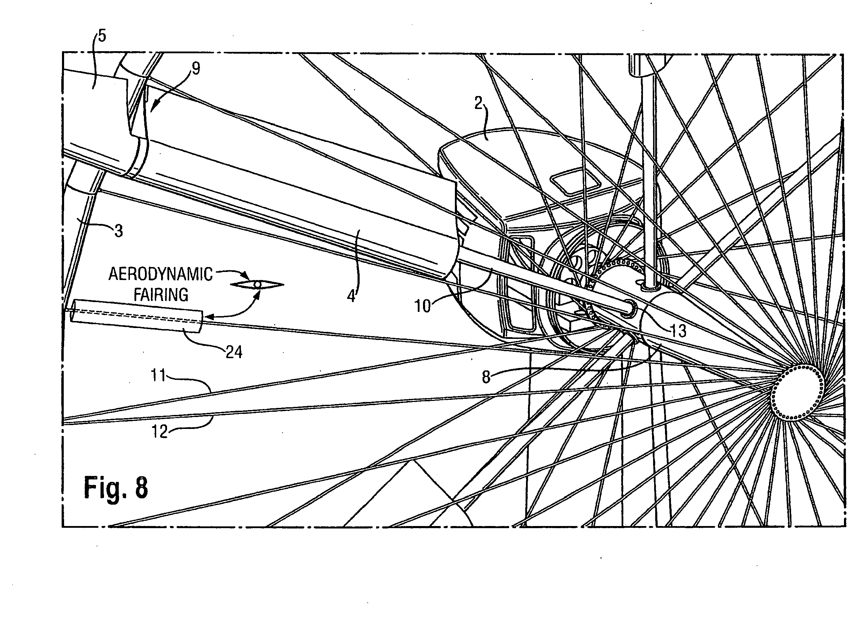

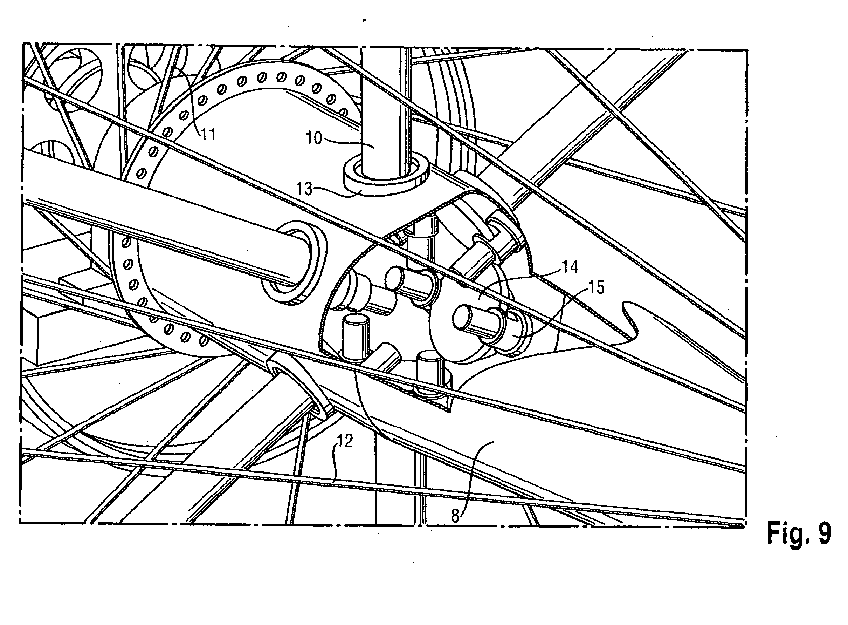

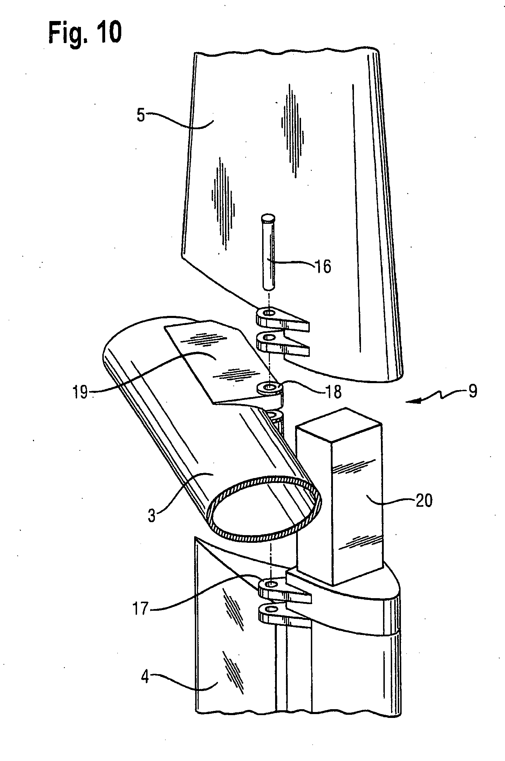

**FIGURES 7** - 11 show the rotor system in which applicant's invention is embodied comprising the tension wheel in more detail. **FIGURE 7** shows the tension wheel hub assembly 106 mounted to a nacelle 2 which is supported by the tower 1. The tension wheel hub assembly 106 comprises a rim structure 3 supported by a plurality of spokes 7 attached to the hub 8. The main blades 108 are mounted to the hub 8 and attached to the rim structure 3 of the tension wheel. The blades 108 are attached to the tension wheel rim structure via a hinging mechanism which is shown in more detail in **FIGURE 10**. The inner section 4 of the blades 108 between the rim structure 3 and the hub 8 comprises an airfoil, wherein an inner blade shaft 10 (shown in **FIGURE 8**) provides structural support for the airfoil and provides partial structural support for the entire rotor mass by allowing the rotor to be supported by both the lower half spokes - acting in tension - and the upper half blade shafts acting in compression as rotation occurs. The tension wheel additionally provides axial (lead-lag) structural support between the blades to reduce cycling loads due to gravity effects on the blades on each revolution which particularly stresses the root section of the blade. So tension wheel structure allows greater rotor diameter compared to unsupported conventional blade/rotor structures.

The outer sections 5 of the blades 108 include the airfoil outside the tension wheel rim structure 3. Both the inner blade section 4 and the outer blade section 5 are airfoils mounted on a common structural spar or beam 10 that extents from the hub 8 to near the blade tip. The tension ring provides structural support for the blades for thrust loads (wind from the front), lead-lag loads (gravity effect on the blades) and negative thrust loads (the rare event where rapid wind shift impinges on the rotor from behind).

The blades 108 shown in **FIGURE 7** may have a retractable outer section 6. Furthermore, the blades 108 may operate with independent blade pitch control (IBPC). Large rotors benefit from IBPC due to the usual difference in wind velocity from the top of the rotor to the bottom.

The spokes 7 extending from different axial positions of the hub 8 to the tension wheel rim structure 3 serve to:
a)provide structural support to the blades 108 for thrust loads from the wind,
b) keep the rim structure 3 from bowing as blades in the plane of rotation flex (the lead-lag mode) by maintaining a rigid structural arc between the blades, and
c) transmit the torque from the blades/rim to the hub 8.

The hub or spindle 8 supports the rotor and transmits the torque of the rotor to the drive train and generating system.

The spokes 7 comprise aft spokes 11 and forward spokes 12 (see **FIGURE 8**). The aft spokes 11 resist loads in the forward direction and transmit torsional loads from the blades 108 and the rim 3 to the spindle (hub) drive shaft of the gear box connecting to the generators. The forward spokes 12 support the tension wheel and blades to resist the thrust loading from the winds. These spokes 12 are also attached to the forward end of the spindle (or hub) at a tangentially located position on the spindle. This enables rotation of the rim to be transmitted through the tension of the spokes 12 to a rotational force on the spindle.

As already mentioned, the blades 108 are supported by an outer blade mount 9 and an inner blade mount 13. The outer blade mount 9 is a hinging mechanism that attaches the blade to the rim structure 3 and provides:
a) for pitching the blade 108 from a feathered position to the full range of operating positions (angles of attack),
b) structural support for the blade 108 to enable larger rotor diameters than is possible with blades only attached to the hub 8 at the blade root, and
c) allows for mass of the rotor to be supported (along with the spokes in tension) by transmitting the load to the blade shafts 10. The inner blade section 4 comprises an inner blade shaft 10 which is a structural member that may be a beam or spar or some combination thereof as it extents from the hub 8 or spindle to the outer segment 5 of the blade 108. The shaft 10 provides structural support for the aerodynamic blade surfaces and the loads encountered by the blades and rotor. The shaft 10 and blades 108, 4, 5 may be rotated along the axis of the blade to provide aerodynamic pitching of the blade 108.

Inner blade mounts 13 support the blade 108 in bending and axial loads, and combines with the blade shafts 10 and outer blade mount 9 and spokes 7 to support the mass of the rotor. A blade pitch drive 14 is mounted on the spindle (or hub 8) and serves to rotate the blades in pitch, as driven by the blade pitch motor 15.

**FIGURE 10** shows the outer blade mount 9 in more detail. At its outer end the inner blade section 4 comprises a spar splice 20 which is the mating of the structural beam that connects the inner and the outer blade sections 4, 5. The rim structure 3 of the tension wheel comprises a bearing mount 19 and a bearing 18. The inner section 4 and the outer section 5 each comprise a lag 17 for receiving an axle 16 for attaching the inner section 4 and the outer section 5 of the blade to the rim structure 3.

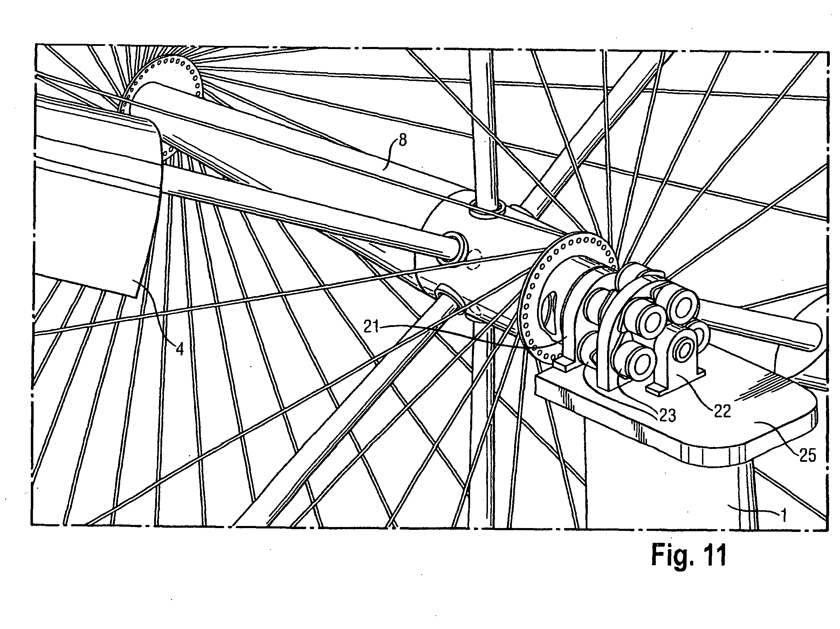

**FIGURE 11** shows the wheel mount in more detail. A forward main bearing 21 and a aft main bearing 22 support the drive train main shaft which connects to the rotor spindle and transfers the moment and thrust loads of the rotor to the machine base 25, and the torque from the rotor through the gearbox to the generators 23.

In **FIGURE 8** there is schematically shown an aerodynamic fairing 24 for the spokes 7 which are provided to reduce the drag of the spokes 7.

The invention has been shown and described with reference to a wind turbine mounted atop a land-based tower, those skilled in the art will realize that the invention is also applicable to underwater turbines wherein the turbine is tethered underwater and the blades are turned by the force of water current.

While the invention has been particularly shown and described with reference to preferred embodiments thereof, it will be understood by those skilled in the art that the foregoing and other changes in form and detail may be made therein without departing from the scope of the invention as defined in the claims.

## Claims

1. A rotor system for a fluid-flow turbine, comprising:
a hub (8) mounted on a shaft ,
a plurality of rotor blades (108), and
a tension wheel, the tension wheel comprising a rim structure (3) mounted to the hub (8) with a plurality of spokes (7), wherein the rim structure (3) comprises an outer rim (107) and an inner rim (112) interconnected with each other and the rotor blades (108) extend outward from the rim structure (3) of the tension wheel and are attached to the rim structure (3) so that the blades (108) are pitchable,
**characterized in that** the rotor blades (108) are extended through the outer and inner rims (107, 112) into the area circumscribed by the rim structure (3) such that pitch control for the rotor blades (108) can be retained at the hub (8).

2. The rotor system of claim 1, **characterized in that** the spokes (7) comprise airfoils, such as blades or sails, to harness the wind energy in the area circumscribed by the rim structure (3).

3. The rotor system of claim 1 or 2, **characterized in that** the rotor blades (8) comprise an inner section (4) between the hub (8) and the rim structure (3) and an outer section (5) extending outward from the rim structure (3).

4. The rotor system of claim 3, wherein the inner sections of the rotor blades comprise airfoils.

5. The rotor system of any of claims 1 - 4, **characterized in that** the rim structure (3) comprises an outer rim (107) and an inner rim (112) interconnected with each other, wherein the rotor blades (108) are mounted to the outer rim (107) and the spokes are attached to the inner rim (112).

6. The rotor system of any of claims 1 - 5, **characterized in that** the blades (108) operate with an independent blade pitch control.

## Patentansprüche

1. Ein Rotorsystem für eine Fluidströmungsturbine, aufweisend:
eine an einer Welle befestigte Nabe (8),
eine Mehrzahl von Rotorblättern (108), und
ein Spannrad, wobei das Spannrad eine mit einer Mehrzahl von Speichen (7) an der Nabe (8) befestigte Felgenkranzstruktur (3) aufweist, wobei die Felgenkranzstruktur (3) einen miteinander verbundenen äußeren Felgenkranz (107) und einen inneren Felgenkranz (112) aufweist und wobei sich die Rotorblätter (108) von der Felgenkranzstruktur (3) des Spannrades nach außen erstrecken und derart an der Felgenkranzstruktur (3) befestigt sind, dass die Rotorblätter pitchbar sind,
**dadurch gekennzeichnet, dass** sich die Rotorblätter (108) durch den äußeren und inneren Felgenkranz (107, 112) in den von der Felgenkranzstruktur (3) umgebenen Bereich derart erstrecken, dass die Pitch-Steuerung für die Rotorblätter (108) bei der Nabe (8) belassen werden kann.

2. Das Rotorsystem nach Anspruch 1, **dadurch gekennzeichnet, dass** die Speichen (7) Tragflächen, wie beispielsweise Blätter oder Segel, aufweisen, um Windenergie in dem von der Felgenkranzstruktur (3) umgebenen Bereich zu nutzen.

3. Das Rotorsystem nach Anspruch 1 oder 2, **dadurch gekennzeichnet, dass** die Rotorblätter (8) einen inneren Bereich (4) zwischen der Nabe (8) und der Felgenkranzstruktur (3) und einen äußeren Bereich (5) umfassen, der sich von der Felgenkranzstruktur (3) nach außen erstreckt.

4. Das Rotorsystem nach Anspruch 3, wobei die inneren Bereiche der Rotorblätter Tragflächen umfassen.

5. Das Rotorsystem nach einem der Ansprüche 1 bis 4, **dadurch gekennzeichnet, dass** die Felgenkranzstruktur (3) einen äußeren Felgenkranz (107) und einen inneren Felgenkranz (112) aufweist, die miteinander verbunden sind, wobei die Rotorblätter (108) an dem äußeren Felgenkranz (107) und die Speichen an dem inneren Felgenkranz (112) befestigt sind.

6. Das Rotorsystem nach einem der Ansprüche 1 bis 5, **dadurch gekennzeichnet, dass** die Rotorblätter (108) mit einer unabhängigen Rotorblatt-Pitch-Steuerung arbeiten.

## Revendications

1. Système de rotor pour une turbine à écoulement de fluide, comportant :
- un moyeu (8) monté sur un arbre,
- une pluralité de pales (108) de rotor, et
- une roue de tension, la roue de tension comportant une structure de jante (3) montée sur le moyeu (8) avec une pluralité de rayons (7)
dans lequel la structure de jante (3) comporte une jante extérieure (107) et une jante intérieure (112) interconnectées l'une avec l'autre, et les pales (108) de rotor s'étendent vers l'extérieur depuis la structure de jante (3) de la roue de tension et sont attachées à la structure de jante (3) de façon que l'inclinaison des pales (108) puisse être réglée,
**caractérisé en ce que** les pales de rotor (108) sont prolongées à travers les jantes extérieure et intérieure (107, 112) dans la zone circonscrite par la structure de jante (3) de façon que la commande du pas pour les pales (108) de rotor puissent être ramenée au moyeu (8).

2. Système de rotor selon la revendication 1, **caractérisé en ce que** les rayons (7) comportent des volets aérodynamiques, tels que des pales ou des voiles, pour capter l'énergie du vent dans la zone circonscrite par la structure de jante (3).

3. Système de rotor selon l'une des revendications 1 ou 2, **caractérisé en ce que** les pales (108) de rotor comportent un tronçon intérieur (4), entre le moyeu (8) et la structure de jante (3), et un tronçon extérieur (5) s'étendant vers l'extérieur depuis la structure de jante (3).

4. Système de rotor selon la revendication 3, dans lequel les tronçons intérieurs des pales de rotor comportent des volets.

5. Système de rotor selon l'une quelconque des revendications 1 à 4, **caractérisé en ce que** la structure de jante (3) comporte une jante extérieure (107) et une jante intérieure (112) interconnectées l'une avec l'autre, dans lequel les pales de rotor sont montées sur la jante extérieure (107) et les rayons sont fixés à la jante intérieure (112).

6. Système de rotor selon l'une quelconque des revendications 1 à 5, **caractérisé en ce que** les pales (108) fonctionnent avec une commande indépendante du pas des pales.
